# EUROPEAN PATENT APPLICATION

(11) **EP 2 479 038 A1**
(43) Date of publication of application: **25.07.2012**
(21) Application number: 11305062.9
(22) Date of filing: 21.01.2011
(51) Int. Cl.: B42D 15/10, B29C 65/02

(54) **Security document and method of manufacturing it**

(71) Applicant: Gemalto SA, 92190 Meudon (FR)
(72) Inventor: Lankinen, Mikko, 92190 Meudon (FR)
(74) Representative: Cour, Pierre

(57) **Abstract**

A security document having a sleeve (6) and a data page (8), the data page (8) comprising a data page material layer (81), the sleeve (6) comprising a first layer (11) comprising a first material, a second layer (12) comprising a second material, and a third layer (13) comprising a third material film, the first layer (11), the second layer (12) and the third layer (13) being laminated together such that the second layer (12) is interposed between the first layer (11) and the third layer (13), and the third layer (13) of the sleeve (6) being attached to the data page (8) such that the third material film of the third layer (13) is situated against the data page material layer (81) of the data page (8). A joint between the sleeve (6) and the data page (8) is a thermal joint provided by a thermal joining process, and both the third material of the third layer (13) and the data page material of the data page material layer (81) is polycarbonate.

## Description

### FIELD OF THE INVENTION

The present invention relates to a security document such as a passport, for example.

A typical passport comprises a data page and a booklet attached to each other through a sleeve. The sleeve provides a flexible hinge between the booklet and the data page.

Passport manufacturers are constantly trying to improve safety of their products by making the passports more difficult to counterfeit. One way of improving the safety of passports is to impede clean detaching of the data page from the sleeve.

### BRIEF DESCRIPTION OF THE INVENTION

An object of the present invention is to provide a security document with a tamper evident joint between a sleeve and a data page. A further object of the present invention is to provide a method for manufacturing said security document.

The objects of the invention are achieved by a security document and a method of manufacturing a security document which are characterized by what is stated in the independent claims. The preferred embodiments of the invention are disclosed in the dependent claims.

The invention is based on the idea of attaching the sleeve to the data page by a thermal joint, the thermal joint comprising a polycarbonate film of the sleeve against a polycarbonate layer of the data-page.

An advantage of the security document of the invention is that detaching of the data page from the sleeve leaves clear evidence of tampering on both the sleeve and the data page.

### BRIEF DESCRIPTION OF THE DRAWINGS

In the following the invention will be described in greater detail by means of preferred embodiments with reference to the attached drawings, in which
Figure 1 shows a side view of an opened security document according to an embodiment of the invention;
Figure 2 shows a front view of the opened security document of Figure 1;
Figure 3 is a blow-up of the ultrasonic welding tool shown in Figure 1; and
Figure 4 shows an ultrasonic welding tool as seen obliquely from below.

### DETAILED DESCRIPTION OF THE INVENTION

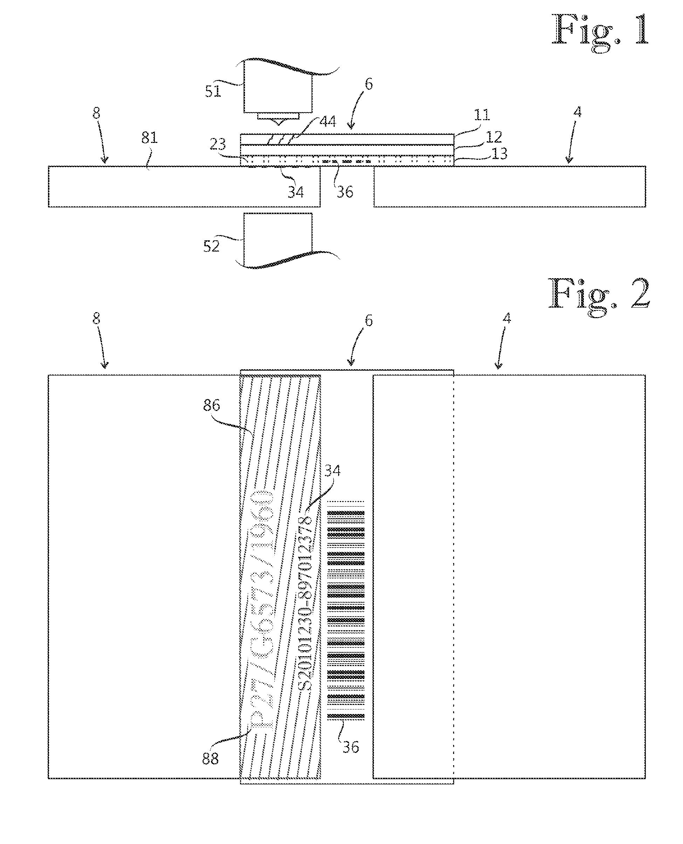

Figure 1 shows a security document having a booklet 4, a sleeve 6 and a data page 8. The sleeve 6 provides a flexible hinge between the booklet 4 and the data page 8.

The sleeve 6 comprises a first layer 11 comprising a first material, a second layer 12 comprising a second material, and a third layer 13 comprising a third material film. The first layer 11, the second layer 12 and the third layer 13 are laminated together such that the second layer 12 is interposed between the first layer 11 and the third layer 13. The third layer 13 of the sleeve 6 is attached to the data page 8 such that the third material film of the third layer 13 is situated against a data page material layer 81 of the data page 8. The booklet 4 is situated against the third layer 13. The booklet 4 has been attached to the sleeve 6 by sewing.

A joint between the sleeve 6 and the data page 8 is a thermal joint provided by a thermal joining process. Both the third material of the third layer 13 and the data page material of the data page material layer 81 are polycarbonate therefore making the thermal joining process easy. The resulting polycarbonate-polycarbonate interface has peel-strength close to that of a laminated polycarbonate card body. Thus it is impossible to separate the sleeve 6 intact from the data page 8.

The lamination of the sleeve 6 may be at least partially achieved by the thermal joining process used to join the sleeve 6 and the data page 8. In other words, prior to the thermal joining process the first layer 11, the second layer 12 and the third layer 13 may be substantially separate layers or they may be only preliminary laminated together.

Thickness of the third layer of the sleeve is selected such that the sleeve is flexible enough to act as a hinge. In a typical embodiment the thickness of the third layer is less than 50 micrometers (µm). However, in some embodiments it is possible to use a third layer having a thickness between 50 µm and 200 µm.

In an embodiment the first material of the first layer 11 is polyester fabric. The second material of the second layer 12 may be thermoplastic polyurethane or polyester based adhesive.

The thermal joint between the sleeve 6 and the data page 8 is a joint provided by ultrasonic welding. Figure 1 shows ultrasonic welding equipment comprising an ultrasonic welding tool 51 and a counterpart 52 for the ultrasonic welding tool 51. In an alternative embodiment the thermal joint may be a joint provided by laser welding or hot pressing.

The area of the thermal joint is substantially equal to overlapping area of the sleeve 6 and the data page 8. In an alternative embodiment the area of the thermal joint may be smaller. In Figure 2 the overlapping area of the sleeve 6 and the data page 8 is denoted by reference number 86 and provided with a pattern in order to explicitly show the boundaries of the overlapping area 86. Figure 2 shows the opened security document of Figure 1 as seen from below.

The thermal joint between the sleeve 6 and the data page 8 is a non-uniform joint such that the strength of the thermal joint varies in the area of the thermal joint. The non-uniform character of the thermal joint is achieved by localized supplying of heat to boundary surface between the third material of the third layer 3 and the data page material of the data page material layer 81. The localized supplying of heat provides an uneven distribution of heat on the boundary surface such that amount of heat energy absorbed per unit area by maximum heat areas is substantially higher than average amount of heat energy absorbed per unit area at the boundary surface.

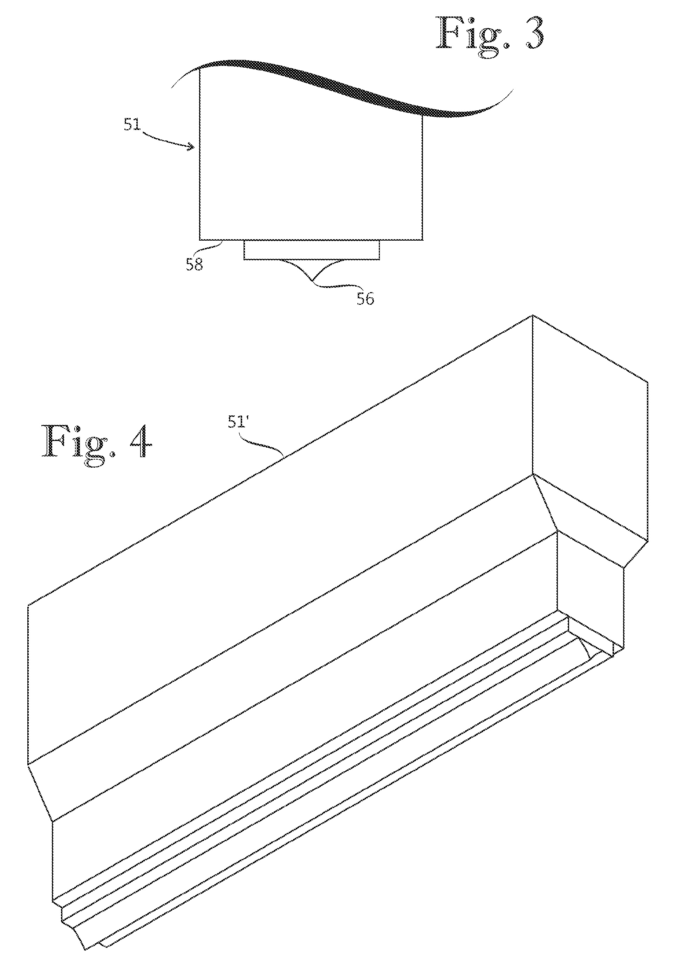

Figure 3 is a blow-up of the ultrasonic welding tool 51 shown in Figure 1. Figure 3 shows that the ultrasonic welding tool 51 has a sharp tip 56 adapted to form a maximum heat area. The ultrasonic welding tool 51 also has a base portion 58 adapted to form a minimum heat area.

The localized supplying of heat is adapted such that visible deformation of the data page is minimized. In a typical embodiment heat density supplied to maximum heat areas is so high that supplying heat with such a density to entire area of the thermal joint would deform the data page significantly. Choosing the level of heat density is a compromise. High heat density provides strong thermal joint but causes a risk of visible deformation. Low heat density does not cause any risk of visible deformation but provides a weaker thermal joint thereby making counterfeiting easier.

The localized supplying of heat provides sufficiently strong thermal joint which leaves clear evidence if a counterfeiter tries to detach the data page from the sleeve. Detaching the data page from the sleeve inflicts damages to surfaces of the data page and the sleeve. After the detachment both the joint surface of the data page and the joint surface of the sleeve is ragged and contains material residue from the counter surface.

The non-uniform character of the thermal joint between the sleeve and the data page may be utilized to provide information. In the embodiment shown in Figure 2 maximum heat areas of the thermal joint provide information 88 in a form of letters and numbers. In an alternative embodiment the thermal joint may provide information in a form of a character, symbol or other distinctive shape. The thermal joint may provide a decorative effect. Figure 4 shows an ultrasonic welding tool 51' as seen obliquely from below.

Minimum heat areas may also be used to provide information. It is also possible to provide information by combination of maximum heat areas and minimum heat areas. The information provided by the thermal joint may be visible to human eye in normal lighting. Alternatively or additionally reading the information provided by the thermal joint may require infrared and/or ultraviolet light.

Due to the ultrasonic welding process the polycarbonate of the third layer 13 interacts with the polycarbonate of the data page material layer 81. The interaction between the materials may include mutual adhesion of the materials and/or partially mixing of the materials.

The polycarbonate film of the third layer 13 is a perforated film having a plurality of through holes 23. The through holes 23 are adapted to increase the interaction between the polycarbonate of the third layer 13 and the polycarbonate of the data page material layer 81. Therefore the through holes 23 increase the non-uniform nature of the thermal joint. The through holes 23 are also adapted to facilitate breaking of the third layer 13 in case a forger tries to tear the data page 8 off the sleeve 6.

Instead of through holes, it is possible to provide the polycarbonate film of the third layer with a plurality of depressions, wherein the depressions are adapted to increase the interaction between the polycarbonate of the third layer and the polycarbonate of the data page material layer.

There are small cuts 44 in the first material of the first layer 11. The small cuts 44 are adapted to facilitate breaking of the first layer 11 in case a forger tries to tear the data page 8 off the sleeve 6.

The third layer 13 of the sleeve 6 comprises a security printing 34 on the lower surface thereof. Herein expression "the lower surface of the third layer 13" refers to Figure 1 where the data page 8 is below the sleeve 6. The security printing 34 is located in the overlapping area 86 of the sleeve 6 and the data page 8. The security printing 34 is inter-locked between the sleeve 6 and the data page 8. In alternative embodiments the security document may comprise a security printing on at least one surface of the second layer and/or on at least one surface of the third layer. In alternative embodiments the security printing may extend beyond the overlapping area of the sleeve and the data page. In Figure 2 the security printing 34 comprises a letter and a plurality of numbers. In an alternative embodiment security printing may comprise line graphics or other graphical elements, for example.

The third layer 13 also comprises a laser engraving 36 having a form of a bar code. In an alternative embodiment a laser engraving may comprise for example the name of the holder of the security document and/or the serial number of the security document. Possibility to laser engrave the sleeve enables laser personalization of the sleeve. In known security document having a sleeve consisting of polyester and adhesive the laser personalization is not possible.

It will be obvious to a person skilled in the art that the inventive concept can be implemented in various ways. The invention and its embodiments are not limited to the examples described above but may vary within the scope of the claims.

## Claims

1. A security document having a sleeve (6) and a data page (8), the data page (8) comprising a data page material layer (81), the sleeve (6) comprising a first layer (11) comprising a first material, a second layer (12) comprising a second material, and a third layer (13) comprising a third material film, the first layer (11), the second layer (12) and the third layer (13) being laminated together such that the second layer (12) is interposed between the first layer (11) and the third layer (13), and the third layer (13) of the sleeve (6) being attached to the data page (8) such that the third material film of the third layer (13) is situated against the data page material layer (81) of the data page (8), **characterized in that** a joint between the sleeve (6) and the data page (8) is a thermal joint provided by a thermal joining process, and both the third material of the third layer (13) and the data page material of the data page material layer (81) is polycarbonate.

2. A security document according to claim 1, **characterized in that** the thermal joint is a joint provided by an ultrasonic welding, laser welding or hot pressing.

3. A security document according to claim 1 or 2, **characterized in that** the thermal joint is a non-uniform joint such that the strength of the thermal joint varies in the area of the thermal joint.

4. A security document according to any of claims 1 to 3, **characterized in that** the thermal joint provides information in a form of a character, symbol or other distinctive shape.

5. A security document according to any preceding claim, **characterized in that** the polycarbonate film of the third layer (13) is a perforated film having a plurality of through holes (23), the through holes (23) being adapted to increase interaction between the polycarbonate of the third layer (13) and the polycarbonate of the data page material layer (81), the interaction between the materials including mutual adhesion of the materials and/or partially mixing of the materials.

6. A security document according to claim 5, **characterized in that** there are small cuts (44) in the first material of the first layer (11), the small cuts (44) being adapted to facilitate breaking of the first layer (11) in case a forger tries to tear the data page (8) off the sleeve (6).

7. A security document according to any preceding claim, **characterized in that** the security document comprises a security printing (34) on at least one surface of the second layer (12) and/or on at least one surface of the third layer (13), the security printing (34) being located in a joint area of the security document, the joint area being the area where the sleeve (6) is overlapping the data page (8).

8. A security document according to any preceding claim, **characterized in that** the third layer (13) comprises a laser engraving (36).

9. A security document according to any preceding claim, **characterized in that** the second material of the second layer (12) is thermoplastic polyurethane or polyester based adhesive.

10. A security document according to any preceding claim, **characterized in that** the first material of the first layer (11) is polyester fabric.

11. A method of manufacturing a security document, comprising steps of:
providing a first layer (11) comprising a first material, a second layer (12) comprising a second material and a third layer (13) comprising a third material film;
providing a data page (8) comprising a data page material layer (81);
forming a sleeve (6) by laminating the first layer (11), the second layer (12) and the third layer (13) together such that the second layer (12) is interposed between the first layer (11) and the third layer (13);
joining the sleeve (6) to the data page (8) by a joining process such that the third material film of the third layer (13) is joined against the data page material layer (81) of the data page (8);
**characterized in that**
the joining process is a thermal joining process providing a thermal joint; and
both the third material of the third layer (13) and the data page material of the data page material layer (81) is polycarbonate.

12. A method according to claim 11, **characterized in that** the lamination of the sleeve (6) is at least partially achieved by the thermal joining process.

13. A method according to claim 11 or 12, **characterized in that** the thermal joining process includes localized supplying of heat to boundary surface between the third material film of the third layer (13) and the data page material of the data page material layer (81), the localized supplying of heat providing uneven distribution of the heat on the boundary surface such that amount of heat energy absorbed per unit area by maximum heat areas is substantially higher than average amount of heat energy absorbed per unit area at the boundary surface, the localized supplying of heat being adapted such that visible deformation of the data page (8) is minimized.

14. A method according to claim 13, **characterized in that** at least one of the maximum heat areas is adapted to provide information in a form of a character, symbol or other distinctive shape.

15. A method according to any of claims 11 to 14, **characterized in that** the step of providing the third layer (13) comprises perforating the third material film of the third layer (13) in order to provide the third material film with a plurality of through holes (23), the thermal joining process being performed in such a way that the through holes (23) increase interaction between the polycarbonate of the third layer (13) and the polycarbonate of the data page material layer (81), the interaction between the materials including mutual adhesion of the materials and/or partially mixing of the materials.
